# EUROPÄISCHE PATENTANMELDUNG

(11) **EP 0 583 504 A1**
(43) Veröffentlichungstag der Anmeldung: **23.02.1994**
(21) Anmeldenummer: 92114300.4
(22) Anmeldetag: 20.08.1992
(51) Int. Cl.: B29B 17/00, B32B 31/30, B29B 13/06

(54) **Verfahren zur Herstellung von laminierten Platinen für Formpressteile zur Automobilinnenauskleidung, laminierte Platine für Formpressteile und Vorrichtung zur Herstellung von derartigen laminierten Platinen**

(71) Anmelder: Gebing, Thomas, D-48691 Vreden (DE)
(72) Erfinder: Gebing, Thomas, D-48691 Vreden (DE)
(74) Vertreter: Herrmann-Trentepohl, Werner, Dipl.-Ing.

(57) **Zusammenfassung**

Die Erfindung betrifft ein Verfahren zur Herstellung von thermoplastische Kunststoffe aufweisende, laminierten Platinen (21) für Formpreßteile zur Automobilinnenauskleidung, wobei eine Oberschicht (18), die vorzugsweise als Vlies, Dekorstoff oder Folie ausgebildet ist, auf eine Kernschicht (22) auflaminiert wird. Zur Abfallverwertung der bei der Herstellung von Automobilinnenauskleidungen anfallenden Abfallstoffe von Formpreßteilen und Autoteppichen sowie zur preisgünstigen Herstellung von laminierten Platinen ist vorgesehen, daß als Ausgangsstoff für die Kernschicht (22) aus unterschiedlichen thermoplastischen Kunststoffen bestehende Abfallgemische aus Abfallstücken (6) von obigen Formpreßteilen und/oder Autoteppichen verwendet werden, die bei der Herstellung der Formpreßteile und/oder der Autoteppiche anfallen.

## Beschreibung

Die Erfindung betrifft ein Verfahren zur Herstellung von thermoplastische Kunststoffe aufweisende laminierten Platinen für Formpreßteile zur Automobilinnenauskleidung, wobei eine Oberschicht, die vorzugsweise als Vlies, Dekorstoff oder Folie ausgebildet ist, auf eine Kernschicht auflaminiert bzw. -aufkaschiert wird.

Zur Herstellung von modernen Automobilen werden in großem Umfang Innen- und Kofferraumauskleidungen aus mit Gewebeträgerbahnen beschichteten Platinen hergestellt. Zur Innenverkleidung werden dabei Formpreßteile und auch Autoteppiche verwendet. Die Formpreßteile werden aus laminierten Platinen hergestellt, welche in der Regel aus einem Trilaminat, aber auch aus einem Zweischichtmaterial bestehen können. Es sind bereits laminierte Platinen bekannt, die aus einer Kernschicht bestehen und auf ihrer Außenseite eine Oberschicht oder ein Obervlies aufweisen, wobei es sich in der Regel um einen Dekorstoff oder dergleichen handelt. Bei fertig ausgebildeten Formpreßteilen weist dieser Dekorstoff in den Fahrgastinnenraum zugewandt und dient zur Verschönerung des gesamten Innenraumes. Bei der Kernschicht handelt es sich um eine mittels Druck und Temperatur verformbare, aber an sich starre Schicht, welche die Oberschicht trägt. Bei einem Trilaminat ist zusätzlich noch eine Unterschicht, welche in der Regel ebenfalls als Vlies ausgebildet ist, vorgesehen.

Bei dem bisher bekannten Verfahren zur Herstellung von Platinen wird jede Schicht für sich den jeweiligen Anforderungen entsprechend aus einem einzigen bestimmten thermoplastischen Primär-Kunststoff hergestellt. Bei einem Primär-Kunststoff handelt es sich um einen neu hergestellten, mit genau bestimmten Spezifikationen ausgestatteten Rohstofftyp, der vom Kunststoff-Hersteller unverarbeitet erworben wird. Da jede Schicht der Platine in der Regel aus einem anderen thermoplastischen Kunststoff besteht, erschien bisher ein Recycling der beim Stanzen und Pressen anfallenden Abfälle aufgrund der unterschiedlichen Kunststoffe nicht möglich. Obwohl es sich bei den genannten Abfällen um an sich hochwertige Materialien handelt, stellt derzeit die Beseitigung dieser Abfallmengen für die Hersteller ein mit enormen Entsorgungsschwierigkeiten und -kosten verbundenes Problem dar. So werden auf der einen Seite große Mengen teurer Primärrohstoffe für die Herstellung der Basisplatinen verwendet, deren Abfälle jedoch auf der anderen Seite mit allen logistischen und abfallwirtschaftlichen Konsequenzen aufwendig entsorgt werden. Problematisch ist, daß sowohl bei der Herstellung der Platinen, als auch beim Pressen der Formpreßteile und auch beim Schneiden der Autoteppiche allein in Deutschland mehr als 10.000 t/Jahr an Verschnitt und Stanzabfällen anfallen, die bisher als Abfallstoffe galten und derzeit entsorgt werden müssen. Diese Abfälle wurden zum Teil als Sondermüll verbrannt oder auf entsprechenden Deponien deponiert. Die Kosten zur Verbrennung von ca. 1000 t. dieses Sondermülls betragen derzeit etwa DM 500.000,--.

Ein weiteres Problem bei den bekannten Platinen und den daraus hergestellten Formpreßteilen sowie bei Autoteppichen besteht darin, daß die Rohstoffkosten für die unterschiedlichen Primär-Kunststoffe der einzelnen Schichten wegen des fortwährenden Einsatzes von Primärrohstoffen sehr hoch sind und hierdurch die Preise der Platinen, der Formpreßteile und der Autoteppiche ebenfalls sehr hoch sind. Im übrigen steigen auch die Deponiekosten exponentiell, da aufgrund der heutigen Gesetzgebung und des Umweltbewußtseins erhebliche Mengen von Sondermüll deponiert werden müssen, was aufgrund des beschränkten Angebots an Deponien schwierig ist. Hinzu kommt, daß mittelfristig eine Deponierung nur noch möglich sein wird, wenn die Unverwertbarkeit der betreffenden Produkte nachgewiesen wird.

Schließlich wird es in Deutschland ab 1993 eine gesetzliche Rücknahmepflicht für Altfahrzeuge nach dem Verursacherprinzip geben. Hierbei ist zu beachten, daß allein in Deutschland ca. 2,8 Mio. Altfahrzeuge pro Jahr anfallen und dann der zu entsorgende Abfall an Formteilen und Autoteppichen erheblich ansteigen wird.

Aufgabe der Erfindung ist es, ein Verfahren der eingangs genannten Art zur Verfügung zu stellen, mit dem kostengünstig laminierte Platinen für Formpreßteile hergestellt werden können, indem gleichzeitig die Menge an Abfällen, die bei der Herstellung von Formpreßteilen, Autoteppichen und laminierten Platinen für die Automobilinnenauskleidung anfällt, aufbereitet werden kann.

Diese Aufgabe wird erfindungsgemäß dadurch gelöst, daß als Ausgangsstoff für die Kernschicht Abfallstücke verwendet werden, die aus unterschiedlichen thermoplastischen Kunststoffen bestehen. Die Abfallstücke sollen erfindungsgemäß von den Formpreßteilen zur Automobilinnenauskleidung stammen, so daß ein Entsorgungskreislauf für diese Abfälle entsteht, von denen man bisher annahm, daß sie nicht zu recyceln waren. Neben den Abfallresten aus den genannten Formpreßteilen können selbstverständlich auch Abfallreste verwendet werden, wie sie beispielsweise bei dem Zuschnitt von Autoteppichen anfallen. Auch Autoteppiche bestehen in der Regel aus einem zweischichtigen Material aus unterschiedlichen thermoplastischen Kunststoffen, wobei die Oberschicht wiederum in der Regel als Vlies ausgebildet ist.

Die Erfindung bietet den enormen Vorteil, daß nunmehr Abfälle recycelt werden können, die bisher als nicht verwertbar galten und daher zu entsorgen waren. Bisher wurde von Seiten der Hersteller der Autoteppiche, Formpreßteile und der Platinen die Auffassung vertreten, daß ein Recycling der Abfallstoffe der vorgenannten Teile nicht möglich ist, da aus unterschiedlichen Kunststoffen bestehende Mischkunststoffe nicht die gewünschten und erforderlichen Eigenschaften für die genannten Einsatzzwecke hatten. Die Erfindung überwindet dieses Vorurteil. Es wurde erfindungsgemäß festgestellt, daß sich die unterschiedlichen thermoplastischen Kunststoffe der Oberschicht, der Kernschicht und ggfs. weiterer Schichten ohne weiteres mischen lassen und daraus eine Kernschicht herstellbar ist, welche im wesentlichen dieselben Eigenschaften wie ein lediglich aus einem einzigen thermoplastischen Kunststoff bestehende Kernschicht hat. Daher können erhebliche Kosten bei der Herstellung von Platinen und somit auch von Formpreßteilen gespart werden, da die Abfälle und der Verschnitt vollständig wiederverwertet werden können. Desweiteren entfallen durch die Erfindung die Kosten einer möglichen Entsorgung und auch die bereits erwähnte gesetzliche Rücknahmepflicht wirkt sich aufgrund dieses Verfahrens sehr positiv aus, da hierdurch recyclefähiges Material kostengünstig wiederaufbereitet wird. Gerade der letztgenannte Punkt vervielfacht die Bedeutung des erfindungsgemäßen Verfahrens, wenn man neben der derzeit noch im Vordergrund stehenden Verwertung der Produktionsabfälle die künftig zweifellos auftretende Problematik der Wiederverwertung von den entsprechenden Altautos mit ins Kalkül nimmt.

Wichtig und wesentlich ist, daß grundsätzlich sämtliche Automobile, unabhängig von Hersteller, Serie oder Art der Innenausstattung, für die Verwertung geeignet sind, da die Kernschicht keine besonderen Anforderungen an Farbe, spezifisches Gewicht, Dichte, mechanische Eigenschaften usw. stellt, sondern in erster Linie als Thermoplastkonfiguration unter Temperatur- und Druckeinfluß preßfähig sein muß. Durch Versuche ist überraschend festgestellt worden, daß gerade diese Eigenschaften bei einer aus unterschiedlichen Thermoplasten bestehenden Kernschicht gegeben sind.

Ein weiterer Vorteil des erfindungsgemäßen Verfahrens liegt in dem implizierten Kausalzusammenhang zwischen den Abnehmern und den Herstellern der Platinen. Wegen der verhältnismäßig großen Mengen an Abfällen bei den Abnehmern und dem noch viel höheren Bedarf an Platinen besteht die Möglichkeit, ausschließlich volle Lkw-Züge zu disponieren, was logistisch enorme Vorteile bietet. Gleichzeitig können kleine Warenvorräte leichter geplant werden, so daß Lagerprobleme nicht auftreten und jegliche äußere Einflüsse auf die Rohware auf ein Minimum reduziert werden können.

Selbstverständlich kann, da zur Zeit wesentlich mehr Platinen benötigt werden, als Abfallmaterial zur Verfügung steht, ebenfalls geeignetes Material (z.B. Verpackungsabfälle aus Polypropylen- und Polyethylen-Folien und dergleichen) zugekauft und gleichfalls eingearbeitet werden. Dies gilt insbesondere für die am Markt reichlich vorhandenen, sortenreinen, aber z.B. bedruckten oder eingefärbten Materialien, die aufgrund ihrer Farbe nur einen sehr geringen Marktwert besitzen. Gerade derartige Stoffe sind für die Herstellung der erfindungsgemäßen Platinen geeignet, da, wie bereits ausgeführt, an die Platinen bezüglich ihrer Farbgebung keine Ansprüche zu stellen sind.

Selbstverständlich kann die Kernschicht auch coextrudiert oder zwischen einzelnen Kernschichten eine oder mehrere unrecycelte Schichten angeordnet werden, wenn dies von seiten der Preßformteil-Hersteller gewünscht oder beispielsweise aus Stabilitätsgründen erforderlich ist.

Obwohl die Erfindung von einer laminierten Platine mit einer Oberschicht und einer Kernschicht ausgeht, versteht es sich, daß erfindungsgemäß auch eine Unterschicht auf die Kernschicht auflaminiert werden kann. Dabei bietet es sich selbstverständlich an, diese Schicht ebenfalls als Vlies auszubilden. Dies bietet den Vorteil, daß sich das aus der Platine hergestellte Formpreßteil während des Betriebes des Fahrzeugs, in welches das Formpreßteil eingebaut worden ist, vibrations- und geräuschhemmend verhält. Außerdem wirkt eine untere Vliesschicht als optisch verschönernd, wenn das Formteil durch den Benutzer einmal ausgebaut wird.

Um eine elastisch verformbare, recycelte Kernschicht zu erhalten, bietet es sich an, wenn die Abfallstücke, die aus unterschiedlichen Thermoplasten bestehen, auf eine relative Restfeuchte von < 0,01 % und vorzugsweise < 0,005 % getrocknet werden. Insbesondere Polyester neigt nämlich dazu, bei der Verarbeitung der Abfälle zu einer neuen Kernschicht mit Wasser zu reagieren, was zum Zerfall der langkettigen Kunststoffmoleküle führen kann. Durch die erfindungsgemäße Trocknung wird somit ein sprödes Bruchverhalten der neuen Kernschicht und damit der Platine verhindert.

Wenn die Abfallstücke auf eine Größe von < 5 mm zerkleinert und agglomeriert werden, kann eine ausreichende Trocknung, wie oben angegeben, erreicht werden und außerdem kann ein leichter rieselfähiger Zustand des zerkleinerten Materials sichergestellt werden, was die Förderung und Weiterverarbeitueng dieses Materials erheblich verbessert.

Herstellungstechnisch bietet es sich an, wenn die vorzugsweise zerkleinerten Abfallstücke einem Extruder zugeführt werden und anschließend die aus unterschiedlichen Kunststoffen bestehende Kernschicht extrudiert wird. Es versteht sich, daß hierbei die Extrusion über eine entsprechende Breitschlitzdüse zur Herstellung der Kernschicht verwendet wird.

Zur Oberflächenbehandlung und/oder zur Einstellung der Schichtdicke der Platine kann die extrudierte Kernschicht vorteilhafterweise geglättet oder kalandriert werden. In jedem Falle ist jedoch vorgesehen, daß die Oberschicht und ggf. die Unterschicht beim Glätten oder Kalandrieren gleichzeitig mit der Kernschicht verklebungsfrei verbunden bzw. auflaminiert wird. Durch die gleichzeitige Auflaminierung der beiden Schichten beim Glätten oder Kalandrieren ist ein nachträgliches Aufbringen dieser Schichten nicht mehr erforderlich. Im übrigen müssen auch keine zusätzlichen Kleber oder dergleichen verwendet werden, da das Auflaminieren unmittelbar im Anschluß an die Extrusion beim Kalandrieren oder Glätten erfolgt, wenn sich das Material der Kernschicht noch in einem fließfähigen, plastischen Zustand befindet. Außerdem bietet diese Art der Laminierung bzw. Kaschierung die beste Möglichkeit der Befestigung der beiden äußeren Schichten auf der Kernschicht, ohne daß ein Haftvermittler erforderlich ist, der sich wiederum ungünstig auf die Recyclingfähigkeit auswirken kann.

Bisher erfolgte das Auflaminieren der oberen und ggf. der unteren Schicht zum Teil erst nach dem Glätten oder Kalandrieren und Abschneiden eines entsprechenden Stückes aus der Kernschicht, um den dabei anfallenden separaten Verschnitt der Kernschicht wieder nutzen zu können. Nach dem Schneiden wurde auf das nunmehr den Abmaßen der Platine bereits entsprechende Stück der Kernschicht die Ober- und ggf. die Unterschicht aufgeklebt, wobei auch hierbei in der Regel Abfälle des Ober- und ggf. der Unterschicht anfielen, die dann getrennt recycelt werden konnten. Insgesamt war dieses Verfahren jedoch sehr arbeits- und zeitaufwendig, insbesondere jedoch dann, wenn alle Schichten aus unterschiedlichen Kunststoffen bestanden. Diese Nachteile werden sämtlichst bei der Erfindung vermieden.

Die Erfindung läßt sich dann besonders gut verwirklichen, wenn als thermoplastischer Kunststoff für die einzelnen Schichten der Platine Polyester, Polypropylen und/oder Polyamid verwendet wird. Insbesondere bei einer Mischung aus den drei genannten Thermoplasten ergibt sich eine recycelte Kernschicht mit hervorragenden Eigenschaften. Bei Versuchen hat es sich gezeigt, daß eine Mischung von 70 % Polyester und 30 % Polypropylen besonders vorteilhafte Eigenschaften der Kernschicht mit sich bringt.

Neben dem erfindungsgemäßen Verfahren bezieht sich die Erfindung auch auf eine laminierte Platine für Formpreßteile zur Automobilinnenauskleidung, deren einzelne Schichten aus unterschiedlichen thermoplastischen Kunststoffen bestehen. Die bisher bekannten Platinen weisen überwiegend mehrere heterogene Schichten auf, die aus vrschiedenen thermoplastischen Kunststoffen und ggf. anderen Stoffen bestehen. Die Oberschicht und die Unterschicht bestehen in der Regel jeweils aus einem Vlies, Dekorstoff oder einer Folie, welche ebenfalls aus einem thermoplastischen Kunststoff bestehen, wobei in der Regel jedoch für die Unter- bzw. Oberschicht unterschiedliche Kunststoffe eingesetzt werden als für die Kernschicht. Hierin liegt jedoch in der Regel der Grund für die Probleme beim Recyceln, da, wie bereits oben ausgeführt, Abfälle aus unterschiedlichen thermoplastischen Kunststoffen als bisher nicht recycelbar galten und entsorgt werden mußten.

Die eingangs gestellte Aufgabe bezieht sich daher auch auf die Zurverfügungstellung einer Platine, welche kostengünstig herstellbar ist und durch die das Abfallproblem bei der Herstellung von Formpreßteilen für die Automobilinnenauskleidung gelöst werden kann. Durch die unerwartete und überraschende Feststellung, daß unterschiedliche Thermoplast, wie insbesondere Polyamid, Acrylat, Polyester und/oder Polypropylen in einer Mischung für die Herstellung einer Kernschicht geeignet sind, ohne daß dabei Abstriche an die Anforderungen, die an die Platine gestellt werden, gemacht werden müssen, ergeben sich die bereits eingangs genannten, überzeugenden Vorteile. Neben einer bedeutenden Kostenersparnis durch Verwertung der in der Automobilindustrie bei der Innenraumauskleidung anfallenden aus unterschiedlichen thermoplastischen Kunststoffen bestehenden Abfälle ist eine kostenintensive Entsorgung nicht mehr notwendig.

Schließlich bezieht sich die Erfindung auf eine Vorrichtung, welche zur Herstellung der vorgenannten Platinen geeignet ist und insbesondere nach dem vorgenannten Verfahren arbeitet.

Diese Vorrichtung setzt sich aus verschiedenen einzelnen Einrichtungen zusammen, welche erfindungsgemäß zusammenwirken, um die o.g. laminierten Platinen herzustellen. Die im Produktionsprozeß an erster Stelle angeordnete Einrichtung dient zum Zerkleinern der Abfallstücke, die zum einen von aus Platinen hergestellten Formpreßteilen zur Automobilinnenauskleidung anfallen und zum andern von Abfallstücken von Autoteppichen stammen, wobei jedes Abfallstück für sich, aber auch die Abfallstücke untereinander jeweils aus unterschiedlichen Thermoplasten bestehen können. Mit Hilfe der Zerkleinerungseinrichtung werden die Abfallstücke auf eine Größe < 5 mm zerkleinert.

An die Zerkleinerungseinrichtung schließt sich eine Einrichtung zur Verdichtung/Agglomeration der zerkleinerten Abfallstücke an. Daran anschließend erfolgt die Trocknung des verdichteten Materials/Agglomerats. Die Trocknung wird hierbei bis auf eine relative Restfeuchte von < 0,005 % durchgeführt. Daraufhin wird das Material einer Extrudereinrichtung zugeführt, welche das Material mittels Temperatur und Druck plastifiziert und austrittsseitig fördert. Durch eine Breitschlitzdüse wird die Kernschicht als Endlosplatte extrudiert.

Desweiteren sieht die erfindungsgemäße Vorrichtung eine Speichereinrichtung, für das Oberschichtmaterial und ggf. für das Unterschichtmaterial vor, welche jeweils beispielsweise in Form einer Speicherrolle ausgebildet sein kann.

Desweiteren ist eine Einrichtung zum Kalandrieren des Laminats und zum gleichzeitigen Laminieren der Oberschicht und ggf. der Unterschicht auf die extrudierte Kernschicht vorgesehen. Es versteht sich, daß die Speichereinrichtungen für das Oberschicht- und Unterschichtmaterial im Bereich der Einrichtung zum Glätten oder Kalandrieren angeordnet ist.

Schließlich schließt sich an die Einrichtung zum Kalandrieren oder Glätten eine Abzugseinrichtung nebst Schneideinrichtung zum Längs- und Querschneiden der Platine sowie ein Ablagetisch an.

Mit Hilfe der vorgenannten erfindungsgemäßen Vorrichtung läßt sich vorteilhafterweise die beschriebene laminierte Platine herstellen und auch das vorgenannte Verfahren verwirklichen.

Weitere Merkmale, Vorteile, Ziele und Anwendungsmöglichkeiten der Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in Kombination den Gegenstand der vorliegenden Erfindung, unabhängig von ihrer Rückbeziehung oder Zusammenfassung in den Ansprüchen. Es zeigen:
- Fig. 1: eine schematische Darstellung der erfindungsgemäßen Vorrichtung und
- Fig. 2: eine Querschnittsdarstellung durch eine erfindungsgemäß laminierte Platine.

Die erfindungsgemäße Vorrichtung 1 weist eine nicht näher dargestellte Einrichtung zum Zerkleinern bzw. Agglomerieren von Abfallstücken auf, die aus unterschiedlichen thermoplastischen Kunststoffen bestehen und aus der Automobilinnenauskleidung stammen. Insbesondere handelt es sich bei den zu zerkleinernden und zu agglomerierenden Abfallstücken um Abfallreste von Formpreßteilen und von Autoteppichen.

An die nicht dargestellte Zerkleinerungseinrichtung schließt sich eine Verdichtungseinrichtung/Agglomerator (nicht dargestellt) an. Darauf folgt eine Trocknungseinrichtung 2, in welcher die von der Zerkleinerungseinrichtung zerkleinerten Abfallreste auf eine Restfeuchte von vorzugsweise 0,005 % getrocknet werden. Die Trocknungseinrichtung 2 weist einen Trocknungsbehälter 3 und eine Rohrleitung 4 auf, die an ihrem unteren Ende ein trichterförmiges Endstück 5 aufweist. Über die Rohrleitung wird heiße Luft dem Trocknungsbehälter 3 zugeführt, wodurch die agglomerierten Abfallstücke 6 entsprechend getrocknet werden. Über die Rohrleitung 7 wird die über die Rohrleitung 4 zugeführte Luft wieder abgeführt, schockgefroren und sodann wieder erhitzt, um anschließend der Rohrleitung 4 neu zugeführt zu werden.

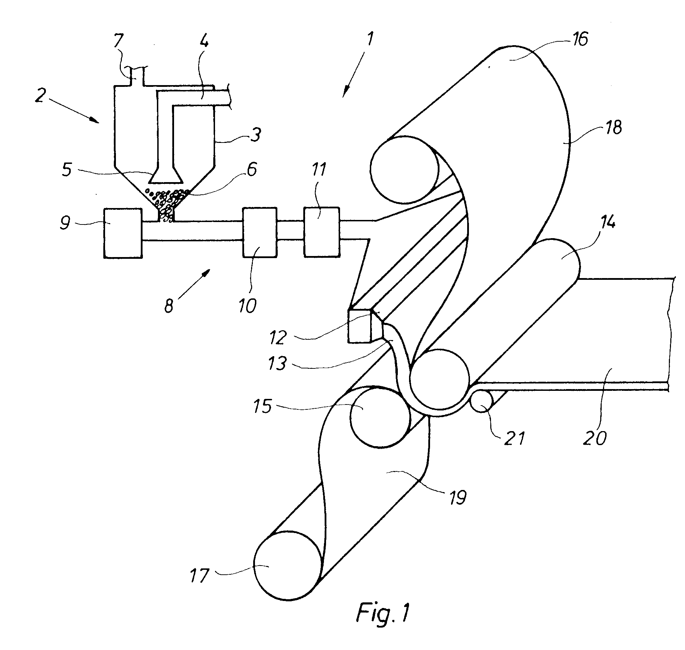

Der Trocknungsbehälter 3, dessen Boden trichterförmig ausgebildet ist, mündet in einen insgesamt mit 8 bezeichneten Extruder. Es versteht sich, daß zwischen dem Trocknungsbehälter 3 und dem Extruder 8 eine nicht näher dargestellte Verschluß- und Einzugseinrichtung sowie Meßeinrichtung zur Messung der Restfeuchte vorgesehen ist, wodurch die Abfallstücke 6 dem Extruder 8 erst zugeführt werden, wenn die gewünschte Restfeuchte erreicht ist. Der Extruder weist eine MotorGetriebe-Einheit 9 auf, welche zum Antrieb der nicht dargestellten Schnecke im Extruder dient. Weiterhin ist der Extruder mit einem vorzugsweise kontinuierlich arbeitenden Schmelzefilter 10 versehen, welcher mehrere nicht dargestellte Filterscheiben aufweist, so daß zum Wechsel eines Filters die Anlage nicht oder nur kurzfristig angehalten werden muß. An den Schmelzefilter 10 schließt sich eine Zahnradpumpe 11 und daran eine Breitschlitzdüse 12 an. Vor und hinter der Zahnradpumpe 11 findet eine ständige computergestützte Druckmessung statt, welche den gemessenen Wert mit einem bestimmten vorgegebenen Druck-Sollwert vergleicht. In Abhängigkeit der Differenz von Ist- und Solldruck wird die Geschwindigkeit der Motor-Getriebe-Einheit und/oder der Pumpe 11 ebenfalls computergestützt geregelt. Aus der Breitschlitzdüse, deren Breite und Spaltdicke veränderbar ist, wird eine sogenannte extrudierte Kernschicht 13 extrudiert. Die extrudierte Kernschicht 13 wird im Beispiel der Fig. 1 zwei Kalanderwalzen 14, 15 zugeführt. Statt der Kalanderwalzen 14, 15 kann selbstverständlich auch eine Glätt- oder sogenannte Chill-Roll-Einrichtung vorgesehen sein, welche lediglich die Oberfläche des extrudierten Materials geglättet.

Im Bereich der Kalanderwalzen 14, 15 befinden sich jeweils eine Speicherrolle 16, 17 für Laminier/Kaschiermaterial für eine Oberschicht 18 und eine Unterschicht 19. Beide Schichten 18, 19 werden zusammen mit der extrudierten Kernschicht 13 durch die Kalanderwalzen 14, 15 hindurchgeführt und somit auf die extrudierte Kernschicht auflaminiert. Auf diese Weise ergibt sich ein Trilaminat 20, welches über eine Umlenkrolle 21 von der Kalandrierwalze 14 abgenommen wird. An die Kalandrierwalzen 14, 15 schließt sich eine nicht näher dargestellte Schneideinrichtung an, welche aus dem Trilaminat Platinen 21 gewünschter Abmessung schneidet.

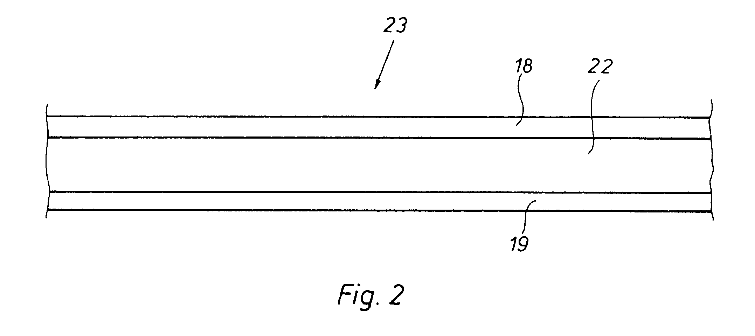

Eine laminierte Platine nach der vorliegenden Erfindung ist in Fig. 2 querschnittweise dargestellt. Sie besteht aus einer Kernschicht 22 und der bereits erwähnten auflaminierten Oberschicht 16 und Unterschicht 17. Die Kernschicht 22 besteht aus unterschiedlichen thermoplastischen Kunststoffen aus recycelten Abfallstoffen der Autoindustrie. Durch Versuche hat es sich gezeigt, daß sich besonders vorteilhafte Eigenschaften der Kernschicht 22 dann ergeben, wenn Abfallstücke 6 von Formpreßteilen und/oder Autoteppichen verwendet werden, die überwiegend aus Polyester, Acrylat, Polypropylen und/oder Polyamid bestehen. Bei der Oberschicht handelt es sich im allgemeinen um einen Dekorstoff, der aus einem Vlies oder dergleichen aus einem einzigen thermoplastischen Kunststoff besteht. Die Unterschicht wird in der Regel von einem geringwertigen Vlies gebildet, daß ebenfalls aus einem thermoplastischen Grundstoff besteht.

Das erfindungsgemäße Verfahren läuft nun wie folgt ab:
Die bei den Herstellern der Automobilinnenauskleidung anfallenden Abfallreste von Autoteppichen und Formpreßteilen werden vorzugsweise auf eine Größe von < 20 cm zerkleinert und zu Ballen verpackt. Statt diese Ballen wie bisher zu deponieren oder in anderer Weise zu entsorgen, werden diese recycelfähigen Abfallstoffe der vorgenannten erfindungsgemäßen Vorrichtung zugeführt. Zu erwähnen sei an dieser Stelle, daß die Abfallstoffe sich aus unterschiedlichen thermoplastischen Kunststoffen zusammensetzen. Zur Erreichung einer gewünschten Vortrocknung werden die Abfallstoffe auf < 5 mm zerkleinert, agglomeriert und der Trocknungsanlage zugeführt. Die Temperatur in der Trocknungseinrichtung 2 beträgt etwa 160°C, wobei über einen Zeitraum von ca. 5 Stunden getrocknet wird, ohne daß dabei eine thermische Schädigung der Kunststoffe erfolgt. Sobald der gewünschte Trocknungsgrad erreicht ist, wird das Material dem Extruder 8 zugeführt. Im Extruder, in dem das Agglomerat aufgeschmolzen wird, herrschen Temperaturen von 220 bis 270°C. In der Pumpe 11, die wegen der hohen Viskosität erforderlich ist, herrscht eine Temperatur von etwa 280°C. Das extrudierte Material 13 verläßt die Breitschlitzdüse 12 mit einer Temperatur von ca. 260°C, während die Kalandrierwalzen 14, 15 eine Temperatur von ca. 30°C haben. Nach Abzug des Trilaminats 20 von der Walze 14 hat dieses etwa noch eine Temperatur von 50°C und eine quasi homogene Struktur.

### Bezugszeichenliste:

- 1: Vorrichtung
- 2: Trocknungseinrichtung
- 3: Trocknungsbehälter
- 4: Rohrleitung
- 5: Endstück
- 6: Abfallstücke
- 7: Rohrleitung
- 8: Extruder
- 9: Motor-Getriebe-Einheit
- 10: Schmelzefilter
- 11: Zahnradpumpe
- 12: Breitschlitzdüse
- 13: extrudierte Kernschicht
- 14: Kalanderwalze
- 15: Kalanderwalze
- 16: Speicherrolle
- 17: Speicherrolle
- 18: Oberschicht
- 19: Unterschicht
- 20: Trilaminat
- 21: Platine
- 22: Kernschicht

## Patentansprüche

1. Verfahren zur Herstellung von thermoplastische Kunststoffe aufweisende, laminierten Platinen (21) für Formpreßteile zur Automobilinnenauskleidung, wobei eine Oberschicht (18), die vorzugsweise als Vlies, Dekorstoff oder Folie ausgebildet ist, auf eine Kernschicht (13) auflaminiert wird, dadurch gekennzeichnet, daß als Ausgangsstoff für die Kernschicht (13, 22) aus unterschiedlichen thermoplastischen Kunststoffen bestehende Abfallgemische aus Abfallstücken (6) von Formpreßteilen und/oder Autoteppichen jeweils zur Automobilinnenauskleidung verwendet werden, die bei der Herstellung der Formpreßteile und/oder der Autoteppiche anfallen.

2. Verfahren nach Anspruch 1, dadurch gekennzeichnet, daß die Kernschicht (13, 22) coextrudiert wird.

3. Verfahren nach Anspruch 1 oder 2, dadurch gekennzeichnet, daß die Kernschicht (22) mit einer vorzugsweise als Vlies, Dekorstoff oder Folie ausgebildeten Unterschicht (19) verbunden (laminiert) wird.

4. Verfahren nach einem oder mehreren der Ansprüche, dadurch gekennzeichnet, daß die aus unterschiedlichen Thermoplasten bestehenden Abfallstücke (6) auf eine relative Restfeuchte von < 0,01 %, vorzugsweise < 0,005 getrocknet werden.

5. Verfahren nach einem oder mehreren der vorhergehenden Ansprüche, dadurch gekennzeichnet, daß die Abfallstücke (6) agglomeriert und/oder auf eine Größe von < 5 mm zerkleinert werden.

6. Verfahren nach einem oder mehreren der vorhergehenden Ansprüche, dadurch gekennzeichnet, daß die Abfallstücke (6) einer Extrudereinrichtung (8) zugeführt werden und über eine Breitschlitzdüse (12) als extrudierte Kernschicht (13) extrudiert werden.

7. Verfahren nach einem oder mehreren der vorhergehenden Ansprüche, dadurch gekennzeichnet, daß die extrudierte Kernschicht (13) geglättet oder kalandriert wird und daß die Oberschicht (18) und ggf. die Unterschicht (19) beim Glätten oder Kalandrieren gleichzeitig auf die extrudierte Kernschicht (13) laminiert werden.

8. Verfahren nach einem oder mehreren der vorhergehenden Ansprüche, dadurch gekennzeichnet, daß als thermoplastischer Kunststoff für die einzelnen Schichten der Platine (21) Polyester, Polypropylen und/oder Polyamid verwendet wird.

9. Laminierte Platine für Formpreßteile zur Automobilinnenauskleidung, insbesondere hergestellt nach dem vorgenannten Verfahren, mit einer Oberschicht, die auf eine Kernschicht auflaminiert ist, dadurch gekennzeichnet, daß die Kernschicht (22) aus einer Mischung aus unterschiedlichen recycelten Thermoplasten, wie Polyamid, Polyester, Acrylat und/oder Polypropylen besteht.

10. Platine nach Anspruch 9, dadurch gekennzeichnet, daß die Oberschicht (18) und die Unterschicht (19) unter erhöhter Temperatur und erhöhtem Druck verklebungsfrei auf die Kernschicht (22) auflaminiert sind.

11. Vorrichtung (1) zur Herstellung von laminierten Platinen (21) nach den Ansprüchen 9 oder 10 und insbesondere zur Durchführung des Verfahrens nach den vorgenannten Ansprüchen, gekennzeichnet durch
eine Einrichtung zur Zerkleinerung der aus unterschiedlichen Thermoplasten bestehenden Abfallstücke (6) von aus laminierten Platinen (21) hergestellten Formpreßteilen und/oder Autoteppichen zur Automobilinnenauskleidung auf eine Größe < 5 mm,
eine Einrichtung zum Verdichten/Agglomerieren der aus unterschiedlichen Thermoplasten bestehenden Abfallstücke (6),
eine Einrichtung (2) zur Trocknung der zerkleinerten Abfallstücke (6) auf eine relative Restfeuchte von < 0,01 %, vorzugsweise < 0,005 %,
eine Extrudiereinrichtung (8) mit verstellbarer Breitschlitzdüse zum Extrudieren einer extrudierten Kernschicht (13),
eine Speichereinrichtung (16) für das Oberschichtmaterial und vorzugsweise eine Speichereinrichtung (17) für das Unterschichtmaterial,
eine Einrichtung zum Kalandrieren (14, 15) oder Glätten und zum gleichzeitigen Laminieren der Oberschicht (18) und ggf. der Unterschicht (19) auf die extrudierte Kernschicht (13) und
eine Einrichtung zum Schneiden der Platine.
